# EUROPÄISCHE PATENTSCHRIFT

(11) **EP 0 424 675 B1**
(45) Veröffentlichungstag und Bekanntmachung des Hinweises auf die Patenterteilung: **04.08.1993**
(21) Anmeldenummer: 90118242.8
(22) Anmeldetag: 22.09.1990
(51) Int. Cl.: A22C 15/00

(54) **Verfahren und Vorrichtung zum mechanisierten Aufhängen von Würsten**
Method and device for mechanized suspension of sausages
Procédé et dispositif pour suspension mécanisée de saucisses

(30) Priorität: 27.10.1989 DE 3935746
(43) Veröffentlichungstag der Anmeldung: 02.05.1991
(73) Patentinhaber: Kollross, Günter, D-64521 Gross Gerau (DE)
(72) Erfinder: Kollross, Günter, D-6080 Gross Gerau-Dornheim (DE); Steinbis, Fritz, D-6080 Gross Gerau (DE)
(74) Vertreter: Jochem, Bernd, Dipl.-Wirtsch.-Ing.

(56) Entgegenhaltungen:
- DE-A- 3 202 026
- DE-C- 37 181
- DE-C- 3 322 759
- DE-C- 3 806 467
- DE-U- 8 912 219
- FR-A- 1 483 818
- FR-A- 2 619 285

## Beschreibung

Die Erfindung betrifft ein Verfahren zum mechanisierten Aufhängen von auf einem Füllautomaten hergestellten Einzelwürsten mit an deren Enden befestigten Schlaufen auf Rauch- oder Kochstäbe, wobei die einzelnen Schlaufen beim Befestigen am Wurstende erfaßt, aufgeweitet und auf einen Rauch- oder Kochstab aufgebracht werden, sowie eine Vorrichtung zur Durchführung dieses Verfahrens.

Ein solches Verfahren ist aus der DE-PS 34 37 830 bekannt. Diese betrifft ganz allgemein das selbsttätige Aufreihen von mit Halteschlaufen versehenen Gegenständen auf Haltestangen und zeigt und beschreibt im Ausführungsbeispiel das Aufreihen von Würsten auf einen Rauch- oder Kochstab. Gemäß diesem Verfahren werden zunächst die Gegenstände in regelmäßigen Zeitabständen auf das Obertrum einer umlaufenden Endloskette aufgehängt, anschließend die Kettenhalterung mit der unterhalb des Untertrums der Kette angeordneten Haltestange um ihre Längsachse um 180° gedreht und schließlich die Haltestange mit den hieran aufgehängten Gegenständen axial abgeführt. Zum Aufhängen auf die Kette dient ein verschieblich antreibbarer Schlitten mit einem Haken, der die vom Ende eines Schwertes eingefangene Schlaufe ergreift und beim Vorschub des Schlittens auf der Kette ablegt.

Das bekannte Verfahren und die Vorrichtung zu seiner Durchführung sind nicht frei von Nachteilen. So muß wegen der notwendigen Anordnung der Endloskette auf gleicher Höhe wie das Füllrohr und die Einschnür- und Verschließwerkzeuge des Füllautomaten für das Aufbringen neuen Schlauchhüllenmaterials auf das Füllrohr jedesmal die gesamte Vorrichtung aus dem Füllrohrbereich weggefahren werden. Weiterhin müssen die Aufhängeschlaufen extrem groß ausgebildet sein, um über den Kettentrieb hinwegbewegt werden zu können. Für das Abhängen der Würste lassen sich die üblichen Rauch- oder Kochstäbe mit an den Profilenden verdicktem Dreibeinquerschnitt nicht verwenden; es werden Sonderausführungen aus dreieckförmig abgewinkelten Blechen mit einer Rinnenöffnung an einer Dreieckseite benötigt, was einen zusätzlichen Investitionsaufwand mit sich bringt. Weiterhin ist die Wurstlänge durch die Anordnung der Rauch- oder Kochstäbe auf etwa gleichem Niveau wie das Füllrohr beschränkt. Schließlich wird die Endloskette vor der 180°-Drehung, durch welche die Haltestange nach oben verschwenkt wird, von der Gesamtmasse der auf einer Stange aufzuhängenden Gegenstände bzw. Würste belastet und muß diese schrittweise vorwärtsbewegen, was nur mit großem konstruktiven Aufwand zu beherrschen ist und trotzdem erhebliche Erschütterungen im Betrieb mit sich bringt.

Aufgabe der Erfindung ist es demgegenüber, ein Verfahren der eingangs genannten Art sowie eine Vorrichtung zu dessen Durchführung zu schaffen, die ein Aufreihen beliebig langer Würste mit normalgroßen Schlaufen auf herkömmliche Rauchoder Kochstäbe gestatten und bei denen für die Neubestückung des Füllrohrs keine Entfernung der Vorrichtung aus dem Bereich vor der Füllrohrmündung erforderlich ist.

Die Erfindung löst diese Aufgabe verfahrensmäßig dadurch, daß die Schlaufen nach dem Erfassen durch ein erstes Paar beweglicher Tragelemente aus dem Ausstoßbereichs des Füllrohres herausgehoben und gleichzeitig aufgeweitet werden, woraufhin die aufgeweiteten Schlaufen von einem zweiten Paar beweglicher Tragelementen übernommen, einzeln über den in Aufnahmestellung einseitig eingespannten Rauch- oder Kochstab hinweggeführt und schließlich an der dafür vorgesehenen Stelle auf den Rauch- oder Kochstab abgesetzt werden.

Durch das erfindungsgemäße Verfahren werden die vom Strang abgeschnittenen Würste sofort aus dem Bereich vor der Füllrohrmündung auf ein höheres Niveau angehoben und zu dem Rauch- oder Kochstab abtransportiert, auf dem sie einzeln ab gehängt werden. Dadurch braucht die Größe der Schlaufen nur dem Querschnitt des Rauch- oder Kochstabes zu entsprechen, der an einem Ende eingespannt ist und ggf. zusätzlich auf seiner Länge im Wechsel eine weitere Unterstützung erfahren kann. Der Bereich vor der Füllrohrmündung bleibt dadurch von Mitteln zur Durchführung des erfindungsgemäßen Verfahrens frei und gestattet ein unbehindertes Entfernen der Einschnür- und Verschließwerkzeuge sowie der Darmbremse bei der Neubestückung des Füllrohrs mit Schlauchhüllenmaterial, das zudem schneller durchgeführt werden kann und dadurch zur Verminderung der Totzeiten beiträgt.

Nach einem ersten Merkmal zur vorteilhaften Ausgestaltung des erfindungsgemäßen Verfahrens werden die aufgeweiteten Schlaufen von dem zweiten Paar von Tragelementen vor dem Hinwegführen über den Rauch- oder Kochstab weiter als von dem ersten Paar Tragelemente angehoben, so daß auch extrem lange Würste unter dem Rauch- oder Kochstab Platz finden.

Noch ein weiteres Merkmal zur vorteilhaften Ausgestaltung des erfindungsgemäßen Verfahrens sieht vor, daß das Absetzen der Schlaufen auf den Rauch- oder Kochstab durch Absenken des zweiten Paares von Tragelementen unter die obere Begrenzungsebene des Rauch- oder Kochstabs erfolgt, so daß die Schlaufen selbsttätig von dem Rauch- oder Kochstab übernommen werden.

Eine Vorrichtung zur Durchführung des erfindungsgemäßen Verfahrens besteht zweckmäßig aus zwei gesteuert nach aufwärts verschwenkbaren und dabei zur Aufweitung der Schlaufen axial auseinanderspreizbaren Hebeln, deren Enden mit Hakenmäulern zum Erfassen der Aufhängeschlaufen bei deren Befestigung am Wurststrang versehen sind, einem Endlosförderer mit wenigstens einem Förderorgan, an dessen unterem Ende zwei Haken mit Querabstand angeordnet sind, in welche die aufgeweiteten Schlaufen aus den Hakenmäulern der Hebel übernehmbar und über den Rauch- oder Kochstab hinwegführbar sind, sowie Mitteln, durch welche die Haken des Förderorgans unter die obere Begrenzungsebene des Rauch- oder Kochstabs absenkbar sind. Dabei bilden die Hebel eine Fang- und Anhebeeinrichtung, welche die einzelnen Schlaufen erfaßt und durch Aufwärtsverschwenkung in die Haken des Förderorgans einhängt, während letzteres zusammen mit dem Endlosförderer und den Mitteln zum Absenken der Haken auf den Rauch- oder Kochstab eine Transport- und Abhängeeinrichtung bildet, die von der Fang- und Abhebeeinrichtung mechanisch getrennt ist. Es versteht sich jedoch von selbst, daß die Bewegungen der beiden Einrichtungen aufeinander abgestimmt sein müssen, was durch eine elektronische Steuerung ohne Schwierigkeiten zu bewerkstelligen ist. Dabei kann die elektronische Steuerung zugleich so ausgebildet und programmierbar sein, daß für jedes Wurstkaliber eine möglichst dichte Behängung der Rauch- oder Kochstäbe gewährleistet ist.

Nach einem ersten Merkmal zur vorteilhaften Ausgestaltung der erfindungsgemäßen Vorrichtung weist der Endlosförderer einen ersten ansteigenden und einen zweiten horizontalen Abschnitt auf, wobei der Rauch- oder Kochstab unterhalb des zweiten Abschnitts angeordnet ist.

Weitere Merkmale zur vorteilhaften Ausgestaltung der erfindungsgemäßen Vorrichtung ergeben sich aus den Unteransprüchen 6 bis 11 sowie der nachfolgenden Beschreibung einer in der Zeichnung dargestellten bevorzugten Ausführungsform einer Vorrichtung zur Durchführung des erfindungsgemäßen Verfahrens. Darin zeigen:
- Fig. 1: in vereinfachter perspektivischer Darstellung die Gesamtvorrichtung zum mechanischen Aufhängen von Würsten auf einen einseitig eingespannten Rauch- oder Kochstab vor dem Füllrohr und den zugehörigen Verschlußwerkzeugen eines Wurstfüllautomaten,
- Fig. 2: eine vereinfachte Seitenansicht des Endlosförderes der Vorrichtung,
- Fig. 3: in vergrößerter perspektivischer Darstellung einen Förderwagen des Endlosförderers während des Wursttransportes,
- Fig. 4: eine Stirnansicht des Förderwagens oberhalb des Rauch- oder Kochstabs, in Förderrichtung gesehen,
- Fig. 5: einen horizontalen Querschnitt durch die Haken des Förderwagens nach Linie V - V in Fig. 4,
- Fig. 6: in größerem Maßstab einen Ausschnitt aus Fig. 1 während der Füllung von Schlauchhüllenmaterial zu einem Wurststrang,
- Fig. 7: denselben Ausschnitt nach dem Verschließen des Wurststrangs vor der Füllrohrmündung und dem Abt rennen einer Wurst, bevor diese von dem Einschnür- und Verschließwerkzeug freigegeben wird,
- Fig. 8: die freigegebene Wurst mit der von den Hebeln der Fang- und Anhebeeinrichtung erfaßten Aufhängeschlaufe,
- Fig. 9: die an der Aufhängeschlaufe erfaßte Wurst während des Anhebens und Spreizens der Hebel,
- Fig. 10: die Obergabe der aufgeweiteten Aufhängeschlaufe von den Hebeln an die Haken eines Förderwagens und
- Fig. 11: dieselbe Stirnansicht des Förderwagens wie in Fig. 4 beim Abhängen der Wurst auf den Rauch- oder Kochstab.

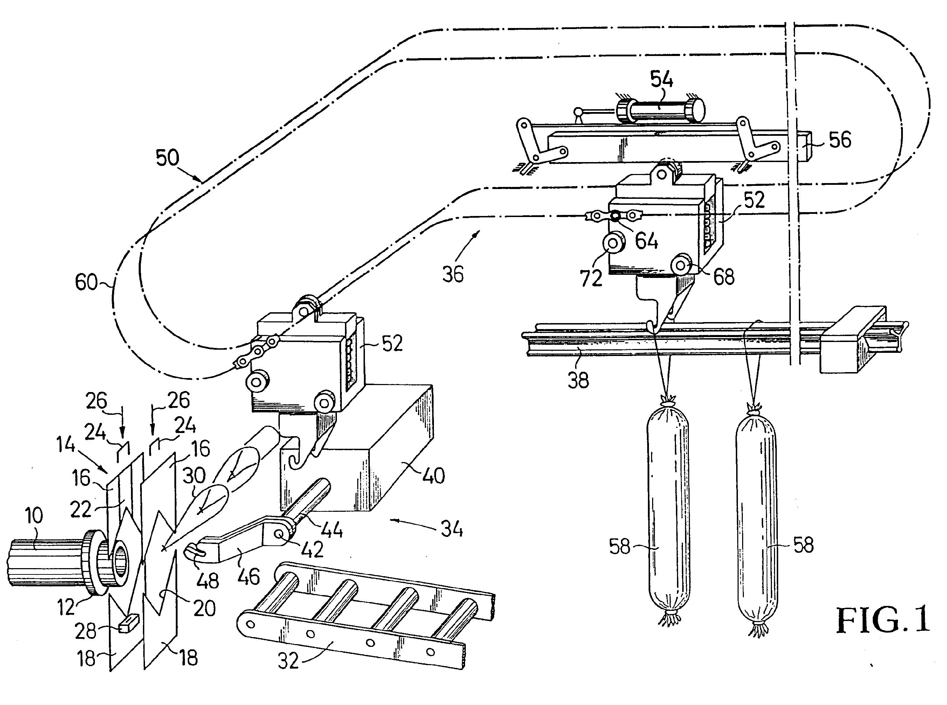

In Fig. 1 sind mit 10 das Füllrohr und mit 12 die Darmbremse eines herkömmlichen Wurstfüllautomaten bezeichnet. Vor der Füllrohrmündung befindet sich ferner in bekannter Weise ein doppelt wirkendes Einschnür- und Verschließwerkzeug, welches zwei Paare gegeneinander verschieblicher Scherenbleche 14, 16 mit V-förmigen Ausschnitten 20 zum Einschnüren des Wurststrangs aufweist. Die oberen Scherenbleche 16 enthalten Führungen 22 für Verschlußklammern 24, die nach dem Einschnüren mittels symbolisch durch Pfeile 26 angedeuteter Klammertreiber nach unten geschoben und unterhalb des Wurststrangs in Gesenken 28 an den unteren Scherenblechen 18 umgebogen werden. Zum Durchtrennen des Wurststrangs zwischen den Verschlußklammern 24 dient eine nicht gezeigte Schneideinrichtung. Weiterhin ist eine Schlaufenzuführeinrichtung vorgesehen, die dem äußeren Scherenblechpaar vor dem Einschnüren von einem nicht gezeigten Schlaufenband je eine Aufhängeschlaufe 30 vorlegt, die beim Einschnüren an den Wurststrang herangeführt und mit in die Verschlußklammer eingebunden wird. Hierfür kann ein Schlaufenband nach der DE-PS 31 47 386 verwendet werden, auf dem die Aufhängeschlaufen, vorzugsweise mit den Knotenenden voraus, schuppenartig und leicht lösbar aufgereiht sind.

Vor dem Einschnür- und Verschließwerkzeug befindet sich zweckmäßig eine geneigte Rollenbahn 32, welche die abgeschnittene Wurst beim Öffnen der Scherenplatten auffängt und abzuführen bestrebt ist.

Die Darmbremse 12 und das Einschnür- und Verschließwerkzeug 14 sind mechanisch miteinander verbunden und können zusammen aus der gezeigten Arbeitsstellung in eine Freigabestellung verschoben und/oder verschwenkt werden, um Platz zum Aufziehen neuen Schlauchhüllenmaterials auf das Füllrohr 10 zu schaffen.

Insoweit entspricht die in Fig. 1 gezeigte Anordnung dem bekannten Stand der Technik und bedarf keiner genauerer Darstellung und Erläuterung.

Fig. 1 zeigt weiterhin in schematischer Darstellung eine Vorrichtung zum mechanischen Erfassen der mit der vorbeschriebenen Anordnung erzeugten Würste und deren Zuführung und Aufhängung auf einem Rauch- oder Kochstab. Die Vorrichtung besteht im wesentlichen aus zwei Teilen, nämlich einer Fang- und Anhebeeinrichtung 34 und einer Transport- und Abhängeeinrichtung 36, mit welcher die von der Fang- und Anhebeeinrichtung 34 erfaßten Würste nacheinander einem einendig eingespannten Rauch- oder Kochstab 38 zugeführt und an vorbestimmten Stellen auf diesen abgehängt werden.

Die Fang- und Anhebeeinrichtung 34 weist einen Getriebekasten 40 auf, aus dem zwei einander koaxial umschließende Wellen 42, 44 herausragen. Jede dieser Wellen 42, 44 trägt am Ende einen abgekröpften Hebel 46 von gleicher Form und Größe, der am Ende mit einem Hakenmaul 48 versehen ist. Mit Hilfe eines (nicht gezeigten) Antriebsmotors, der im Getriebekasten 40 untergebracht sein kann, können die Hebel 46, 48 gemeinsam aus der in Fig. 1 gezeigten Ausgangsstellung um 360° im Uhrzeigersinn verschwenkt werden, wobei die zunächst dicht nebeneinanderliegenden Hebel während eines ersten Schwenkbereichs von etwa 110° durch Einfahren der äußeren Welle 44 in den Getriebekasten auseinandergespreizt werden. Nach einer vorbestimmten Ruhepause werden die Hebel um die restlichen 250° in die Ausgangsstelle zurückverschwenkt, wobei die Auseinanderspreizung wieder rückgängig gemacht wird. Die Ausbildung eines derartigen Getriebes bereitet dem Getriebekonstrukteur keine Schwierigkeiten und bedarf deshalb keiner genaueren Erläuterung.

Die Transport- und Abhängeeinrichtung 36 besteht in der Hauptsache aus einem Endlosförderer 50 mit mehreren daran im Abstand angeordneten Förderwagen 52 sowie einem von einem Kraftzylinder 54 absenkbaren stationären Druckbalken 56, der das Abhängen der Würste 58 auf den einendig eingespannten Rauch- oder Kochstab 38 steuert.

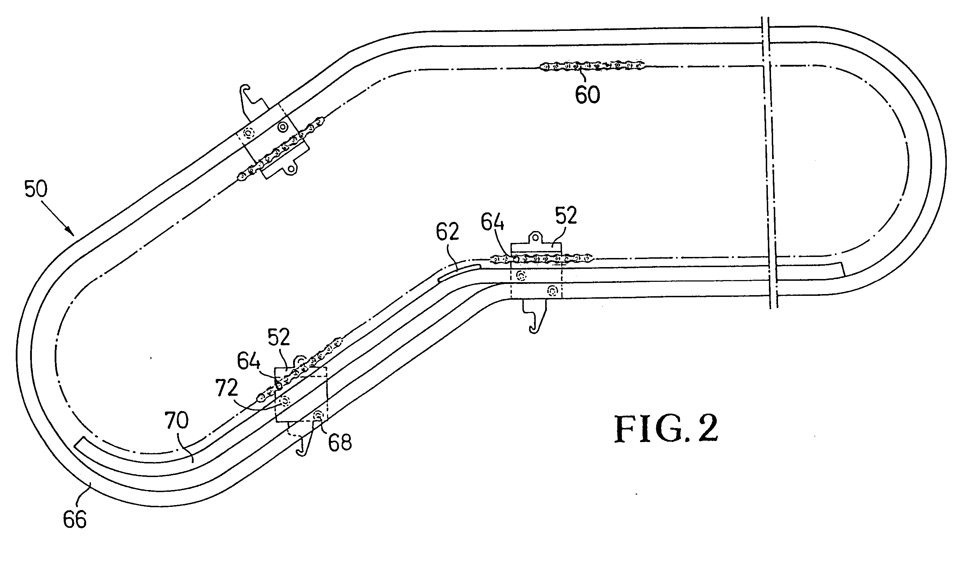

Der Endlosförderer 50 weist zwei mit Abstand nebeneinander angeordnete endlose Förderketten 60 auf, die über (nicht gezeigte) Kettenräder sowie je ein gekrümmtes Führungsstück 62 (Fig. 2) derart geführt sind, daß sich die beiden Kettentrume zunächst von dem einen, der Fang- und Anhebeeinrichtung 34 benachbarten Ende des Endlosförderers schräg nach aufwärts erstrecken und dann horizontal zum anderen Ende oberhalb des eingespannten Rauch- oder Kochstabs 38 verlaufen. Hierzu kann das obere Trum durch ein (nicht gezeigtes) weiteres Kettenrad aus der Schräglage in die Horizontale umgelenkt werden, während dies für das untere Trum das erwähnte Führungsstück 62 besorgt, das aus einem selbstschmierenden verschleißfesten Kunststoff wie Polytetrafluoräthylen bestehen kann. Zum Antrieb der Förderketten 60 kann ein beliebiger Motor wie insbesondere ein Getriebebremsmotor oder ein Schrittschaltmotor verwendet werden, der praktisch keinen Nachlauf besitzt.

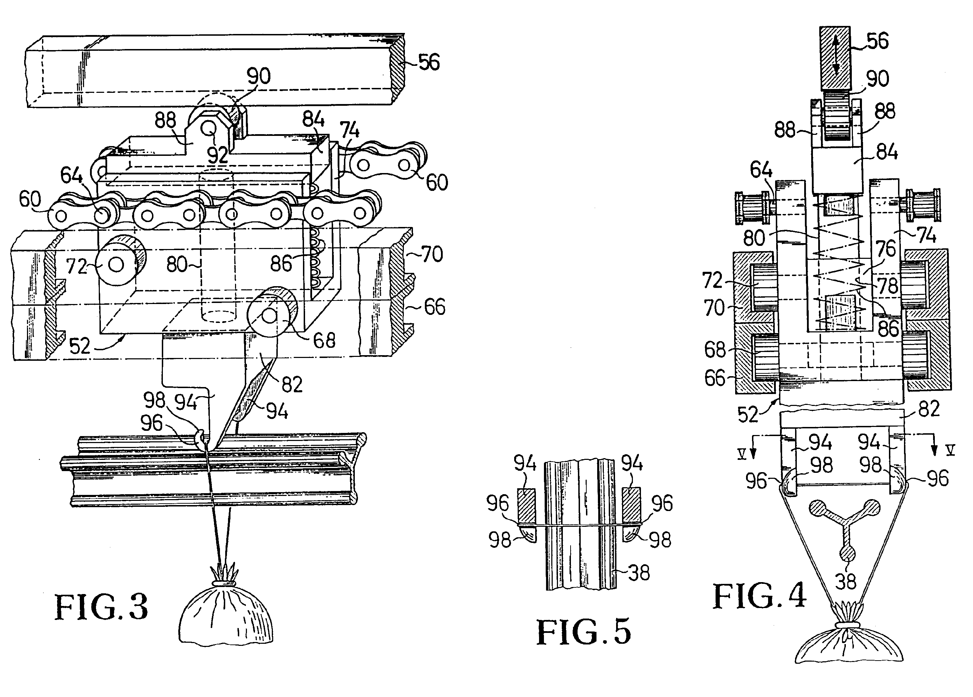

Die Förderwagen 52 sind zwischen den beiden Förderketten 60 angeordnet und auf beiden Seiten nahe einer oberen Ecke durch Anschlußbolzen 64 gelenkig mit den Förderketten 60 verbunden. Wie aus Fig. 2 zu ersehen ist, wird jede Förderkette 60 auf ihrem gesamten Umfang von einer ersten rinnenförmigen Führungsbahn 66 umschlossen. Die beiden ersten Führungsbahnen 66 haben den gleichen Verlauf und nehmen in ihren gegeneinanderweisenden Maulöffnungen je eine erste Führungsrolle 68 an der betreffenden Seite des Förderwagens 52 auf, die dort diametral zu dem Anschlußbolzen 64 drehbar gelagert ist. Zwischen dem unteren Trum jeder Förderkette 60 und der zugehörigen ersten Führungsbahn 66 ist eine zweite rinnenförmige Führungsbahn 70 angeordnet. Auch die beiden zweiten Führungsbahnen 70 haben den gleichen Verlauf und nehmen in ihren gegeneinanderweisenden Maulöffnungen je eine zweite Führungsrolle 72 an der betreffenden Seite des Förderwagens 52 auf, die dort unterhalb des Anschlußbolzens 64 auf etwa halber Höhe zwischen dem Anschlußbolzen 64 und der ersten Führungsrolle 68 drehbar gelagert ist (vgl. insbesonder auch Fig. 3). Die ersten Führungsbahnen 66 und die zweiten Führungsbahnen 70 weisen im schräg nach aufwärts gerichteten Teil 50a des Endlosförderers 50 einen vergrößerten Abstand zueinander auf, so daß die Förderwagen 52 im gesamten unteren Bereich des Endlosförderers 50 dieselbe Lage einnehmen.

Der Aufbau der Förderwagen 52 geht aus den Figuren 3, 4 und 5 hervor. Jeder Förderwagen 52 hat ein im Querschnitt U-förmiges Gehäuse 74, an dessen Außenseiten die Anschlußbolzen 64 für die Förderketten 60 und die Führungsrollen 68, 72 drehbar gelagert sind. Der Steg oder Boden des Gehäuses 74 enthält in der Längsmitte, wo er, wie in Fig. 4 bei 76 eingezeichnet ist, verstärkt sein kann, eine senkrechte Führungsbohrung 78 zur verschieblichen Aufnahme einer Stange 80, deren unteres Ende einen Klotz 82 trägt. Am oberen Ende der Stange 80 ist ein balkenförmiges Druckstück 84 befestigt, das in die Maulöffnung des U-förmigen Gehäuses 74 paßt. Zwei Druckfedern 86, die beiderseits der Stange 80 zwischen dem Boden des Gehäuses 74 und dem Druckstück 84 eingespannt sind, drücken letzteres nach oben bis zum Anschlag des Klotzes 82 gegen die Unterseite des Gehäuses 74, wobei sich das untere Ende des Druckstücks 84 noch innerhalb der Maulöffnung des Gehäuses 74 befindet. An der Oberseite des Druckstücks 84 sind zwei Laschen 88 angeformt, zwischen denen eine mit dem Druckbalken 56 zusammenwirkende Druckrolle 90 mittels einens Bolzens 92 drehbar gelagert ist.

Der Klotz 82 trägt an seiner Unterseite zwei zueinander beabstandete dreieckförmige Wangen 94, deren untere Enden nach aufwärts umgebogen sind und Haken 96 bilden. Die nach aufwärts umgebogenen Hakenenden 98 verjüngen sich, wie aus den Figuren 4 und 5 ersichtlich, durch eine entsprechende Wölbung ihrer Außenseiten sowohl nach oben als auch horizontal nach auswärts und sind an den gewölbten Außenseiten poliert.

Zu der beschriebenen Vorrichtung gehört ferner eine nicht gezeigte elektronische Steuerung, welche die Antriebsmotoren für die Einrichtungen 34 und 36 sowie den Kraftzylinder 54 für die Betätigung des Druckbalkens 56 in wechselseitiger Abhängigkeit steuert und mit dem Betrieb des Füllautomaten und dem Einschnür- und Verschließwerkzeug sowie der Schlaufenzuführung nach einem vorgegebenen Programm koordiniert, das dem jeweils gefahrenen Wurstkaliber angepaßt ist und bei einer Änderung des Kalibers auf einfache Weise umgestellt werden kann.

Die Wirkungsweise der beschriebenen Anordnung mit der mechanischen Wurstaufhängevorrichtung ist folgende:

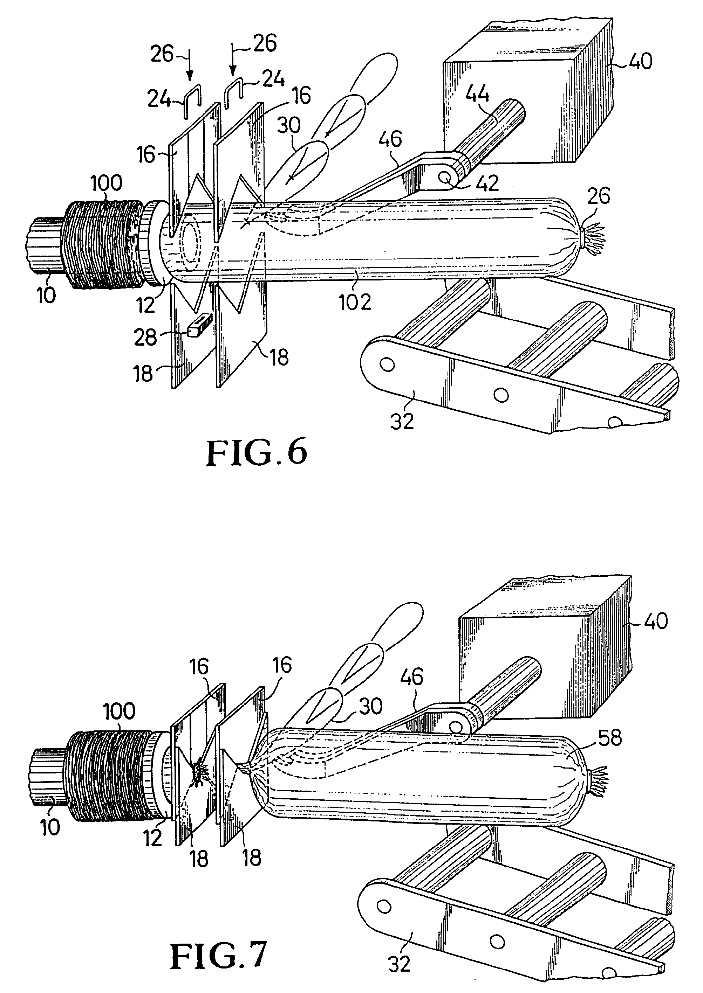

Es sei angenommen, daß, wie in Fig. 6 gezeigt, auf das Füllrohr 10 ein Vorrat von Schlauchhüllenmaterial in Gestalt einer sog. Schlauchraupe 100 aufgesteckt ist, dessen unter der Darmbremse 12 bis vor die Fullrohrmündung hindurchgezogenes Ende durch eine Verschlußklammer 24 verschlossen ist. Die Scherenbleche 16, 18 nehmen ihre Öffnungsstellung ein, und eine Aufhängeschlaufe 30, deren hinteres Ende noch an dem (nicht gezeigten) Schlaufenband anhaftet, ragt mit ihrem geöffneten Knotenende in den Bereich des äußeren Scherenblechpaares. Die Hebel 46 der Fang- und Anhebeeinrichtung 34 nehmen ihre nach links gerichtete Ausgangsstellung ein, in der sie eng nebeneinander liegen und in der ihre Hakenmäuler 48 den einen Schenkel der Aufhängeschlaufe 30 unmittelbar untergreifen. Die Förderketten 60 befinden sich in einer Stellung, in der sich ein Förderwagen 52 am Anfang des schräg nach aufwärts gerichteten Abschnitts des Endlosförderers 50 befindet und stehen still. Ein leerer oder auch bereits teilweise mit Würsten behängter Rauch- oder Kochstab 38 ist unterhalb des geraden Abschnitts 50b des Endlosförderers mit seinem vom Füllautomaten wegweisenden Ende fest eingespannt.

Wenn nun der Füllautomat eingeschaltet wird, gelangt Wurstmasse unter Druck in den durch die Darmbremse 12 hindurchgezogenen verschlossenen Teil des Schlauchhüllenmaterials und füllt dieses unter weiterem Abzug von Schlauchhüllenmaterial zu einem Wurststrang 102 (Fig. 6) an, dessen Länge durch die Einschaltdauer des Füllautomaten bestimmt ist. Nach dessen Ausschaltung schließen die Scherenblechpaare 16, 18 und schnüren den Wurststrang unmittelbar vor der Mündung des Füllrohrs 10 ein. Daraufhin werden die Klammertreiber 26 pneumatisch oder hydraulisch betätigt und verschließen mit je einer Verschlußklammer 24 den eingeschnürten Wurststrang an zwei hintereinanderliegenden Stellen, zwischen denen der Wurststrang dann durch die (nicht gezeigte) Schneideinrichtung durchtrennt wird (Fig. 7).

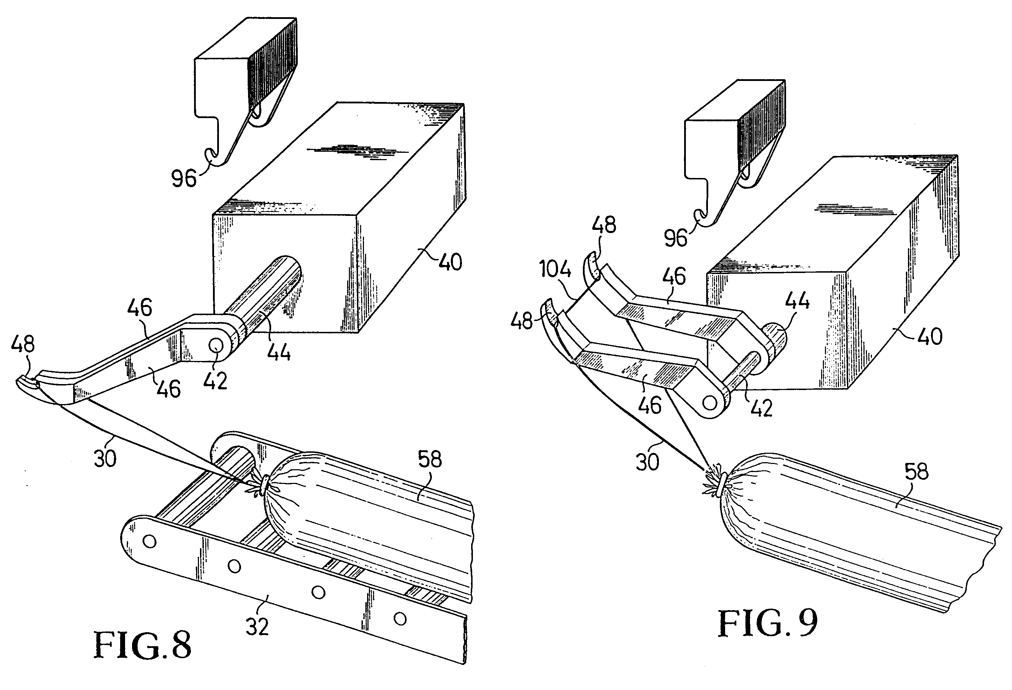

Mit dem Schließen des vorderen Scherenblechpaares wird die vorgelegte Aufhängeschlaufe 30 vom Schlaufenband völlig gelöst und von den Hakenmäulern 48 der Hebel 46 aufgefangen. Das Knotenende der Aufhängeschlaufe 30 wird mit der vorderen Verschlußklammer 24 am Wurststrang befestigt und verbleibt nach dem Durchtrennen des Strangs fest am hinteren Ende der dadurch abgetrennten Wurst 58. Sobald nun die Scherenblechpaare wieder öffnen, fällt die abgetrennte Wurst 58 auf die Rollenbahn 32 und versucht, auf dieser von dem Einschnür- und Verschließwerkzeug 14 wegzurollen, wobei sich die von den Hakenmäulern 48 der Hebel 46 abgefangene Schlaufe straff zieht (Fig. 8).

Nun wird der Motor für den Getriebekasten 40 eingeschaltet, und die Wellen 42, 44 werden unter gleichzeitiger Axialverschiebung der äußeren Welle 44 um ca. 110° gedreht. Durch diese Bewegung werden die Hebel 46 nach aufwärts verschwenkt und gleichzeitig auseinandergespreizt (Fig. 9), wodurch zwischen den Hakenmäulern 48 ein gerader horizontaler Schlaufenabschnitt 104 gebildet wird. Am Ende dieser Schwenkbewegung haben die Hebel 46 einen größeren Abstand als die Haken 96 an dem dort bereitstehenden Förderwagen 52 und hängen den geraden Schlaufenabschnitt 104 in die Haken 96 ein.

Jetzt wird bei stillstehenden Hebeln 46 der Antrieb der Förderketten 60 eingeschaltet, wodurch sich der Förderwagen 52 im Abschnitt 50a des Endlosförderers 50 schräg nach aufwärts bewegt und die Aufhängeschlaufe 30 mit der daran hängenden Wurst 58 aus den Hakenmäulern 48 der Hebel 46 herauszieht. Sobald die Wurst 58 aus dem Schwenkbereich der Hebel 46 herausgefördert ist, wird der Motor für den Getriebekasten 40 erneut eingeschaltet, und die Hebel 46 werden in derselben Drehrichtung wie zuvor bis in ihre Ausgangslage weiter verschwenkt, während sie gleichzeitig wieder axial gegeneinander bewegt werden.

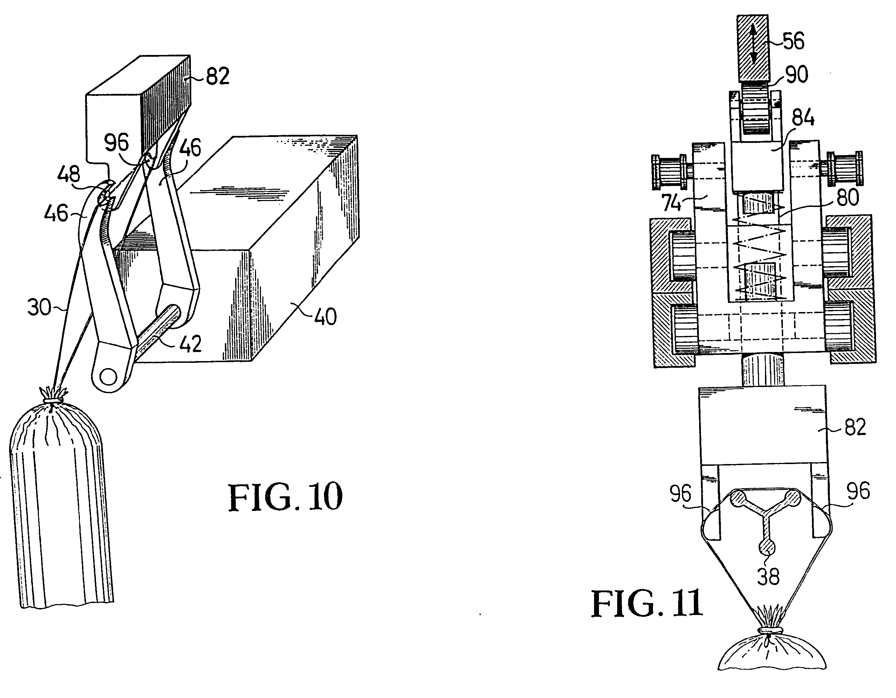

An dem Führungsstück 62 (Fig. 2) wird die Aufwärtsbewegung des Förderwagens 52 in eine Horizontalbewegung überführt, während welcher die an den Haken 96 hängende Wurst 58 mit ihrer aufgeweiteten Aufhängeschlaufe 30 über den Rauch- oder Kochstab 38 hinweggeführt wird. Sobald auf diesem die vorgesehene Aufhängestelle erreicht ist, wird der Druckbalken 56 mit Hilfe des Kraftzylinders abgesenkt und drückt über die Druckrolle 90 das Druckstück 84 nach unten in die Maulöffnung des Gehäuses 74. Dadurch werden auch die Stange 80 und der Klotz 82 mit den Haken 96 nach unten bewegt, und die Aufhängeschlaufe 30 wird mit ihrem zwischen den Haken 96 verlaufenden Teil auf den Rauch- oder Kochstab 38 abgesetzt. Dabei wird, wie in Fig. 11 dargestellt, die Aufhängeschlaufe 30 aus den Haken 96 herausgehoben und vermag über die sich außenseitig verjüngten Hakenenden 98 aus den Haken herauszuschlüpfen, während der Förderwagen 52 mit den Haken 96 seinen Weg längs dem Rauch- oder Kochstab fortsetzt, bis ein anderer Förderwagen die Übernahmestellung gemäß Fig. 1 und 10 über den Hebeln 46 erreicht hat. Mit jeder neuen Wurst, die über den Rauch- oder Kochstab 38 hinweggeführt wird, erfolgt das Absenken des Druckbalkens 56 früher, bis der Rauch- oder Kochstab vollständig beladen ist.

Der Abstand zwischen zwei aufeinanderfolgenden Förderwagen 52 ist zweckmäßig etwa so groß wie, die Länge der Förderketten 60 zwischen der vorerwähnten Übergabestelle oberhalb der Hebel 46 und dem eingespannten Ende des Rauch- oder Kochstabs 38. Bei entsprechender Steuerung des Antriebs für die Förderketten 60 ist jedoch auch ein kürzerer Abstand möglich, bei dem dann die Übernahme einer Wurst von den Hebeln 46 auf die Haken 96 eines Förderwagens 52 bereits erfolgt, bevor die am vorauseilenden Förderwagen hängende Wurst auf den Rauch- oder Kochstab aufgehängt ist. In jedem Fall muß der Abstand zwischen zwei Förderwagen jedoch größer als die freie Länge des Rauch- oder Kochstab sein, um zu vermeiden, daß beim Abhängen einer Wurst nahe dem Einspannende des Stabes zugleich die nächste Wurst am entgegengesetzten Ende abgehängt wird.

Wie aus Fig. 1 ersichtlich, ist der Bereich vor dem Einschnür- und Verschließwerkzeug oberhalb der Rollenbahn 32 frei, so daß das Einschnür- und Verschließwerkzeug 14 mit der Darmbremse 12 unbehindert vom Füllrohr 10 entfernt werden kann, wenn neues Schlauchhüllenmaterial auf das Füllrohr aufgezogen werden muß. Weiterhin befindet sich der Rauch- oder Kochstab 38 auf einem wesentlich höheren Niveau als das Füllrohr 10, so daß auch extrem lange Würste, wie sie vor allem bei großen Kalibern erwünscht sind, unbehindert aufgehängt werden können. Ist der Rauch- oder Kochstab 38 vollständig mit Würsten behängt, kann er mit Hilfe eines (nicht gezeigten) Roboters in den Rauch- oder Kochwagen überführt und ein leerer Stab in die Halterung eingespannt werden. Die beschriebene Aufhängevorrichtung kann aber auch in Verbindung mit einer automatischen Zu- und Abführeinrichtung für Rauch- oder Kochstäbe verwendet werden, wie sie in der älteren Anmeldung P 39 30 876 dargestellt und beschrieben ist.

## Patentansprüche

1. Verfahren zum mechanisierten Aufhängen von auf einem . Füllautomaten hergestellten Einzelwürsten mit an deren Enden befestigten Schlaufen auf Rauch- oder Kochstäbe, wobei die einzelnen Schlaufen beim Befestigen am Wurstende erfaßt, aufgeweitet und auf einen Rauch- oder Kochstab aufgebracht werden, **dadurch gekennzeichnet**, daß die Schlaufen nach dem Erfassen durch ein erstes paar beweglicher Tragelemente aus dem Ausstoßbereich des Füllrohres herausgehoben und gleichzeitig aufgeweitet werden, woraufhin die aufgeweiteten Schlaufen von einem zweiten Paar beweglicher Tragelemente übernommen, einzeln über den in Aufnahmestellung einseitig eingespannten Rauch- oder Kochstab hinweggeführt und schließlich an der dafür vorgesehenen Stelle auf den Rauch- oder Kochstab abgesetzt werden.

2. Verfahren nach Anspruch 1, **dadurch gekennzeichnet**, daß die aufgeweiteten Schlaufen von dem zweiten paar von Tragelementen vor dem Hinwegführen über den Rauch- oder Kochstab weiter als von dem ersten Paar Tragelemente angehoben werden.

3. Verfahren nach Anspruch 1 oder 2, **dadurch gekennzeichnet**, daß das Absetzen der Schlaufen auf den Rauch- oder Kochstab durch Absenken des zweiten paares von Tragelementen unter die obere Begrenzungsebene des Rauch- oder Kochstabes erfolgt.

4. Vorrichtung zur Durchführung des Verfahrens nach einem der vorhergehenden Ansprüche, **gekennzeichnet durch** zwei gesteuert nach aufwärts verschwenkbare und dabei zur Aufweitung der Schlaufen (30) axial auseinanderspreizbare Hebel (46), deren Enden mit Hakenmäulern (48) zum Erfassen der Aufhängeschlaufen (30) bei deren Befestigung am Wurststrang (102) versehen sind, einem Endlosförderer (50) mit wenigstens einem gesteuert umlaufenden Förderorgan (52), an dessen unterem Ende zwei Haken (96) mit Querabstand angeordnet sind, in welche die aufgeweiteten Schlaufen (30) aus den Hakenmäulern (48) der Hebel (46) übernehmbar und über den Rauch- oder Kochstab (38) hinwegführbar sind, sowie Mitteln, durch welche die Haken des Förderorgans (52) unter die obere Begrenzungsebene des Rauch- oder Kochstabs (38) gesteuert absenkbar sind.

5. Vorrichtung nach Anspruch 4, **dadurch gekennzeichnet,** daß der Endlosförderer (50) einen ersten ansteigenden Abschnitt (50a) und zweiten horizontalen Abschnitt (50b) aufweist, wobei der Rauch- oder Kochstab (38) unterhalb des zweiten Abschnitts (50b) mit einem Ende eingespannt ist.

6. Vorrichtung nach Anspruch 4, **dadurch gekennzeichnet,** daß an dem Endlosförderer (50) mehrere Förderorgane (52) in Umfangsabständen angeordnet sind, die größer als die Länge eines Rauch- oder Kochstabs (38) sind.

7. Vorrichtung nach Anspruch 6, **dadurch gekennzeichnet,** daß der Endlosförderer (50) zwei parallele Endlosketten (60) aufweist, zwischen denen die Förderorgane (52) aufgehängt sind.

8. Vorrichtung nach Anspruch 7, **dadurch gekennzeichnet,** daß die Förderorgane als Förderwagen (52) ausgebildet sind, die in die Förderketten (60) umschließenden rinnenförmigen Führungsbahnen (66) geführt sind.

9. Vorrichtung nach Anspruch 8, **dadurch gekennzeichnet,** daß an den Förderwagen (52) auf beiden Seiten zusätzliche Führungsrollen (72) gelagert sind, die in einer zweiten rinnenförmigen Führungsbahn (70) geführt sind, welche sich nur über die unteren Trume der Förderketten (60) erstreckt und derart zu der ersten Führungsbahn (66) verläuft, daß die Förderwagen (52) längs der unteren Trume der Förderketten (60) mit ihren Haken (96) senkrecht nach unten weisen.

10. Vorrichtung nach Anspruch 8, **dadurch gekennzeichnet,** daß die Förderwagen (52) Gehäuse (74) aufweisen, in denen Tragelemente (80, 82, 84) für die Haken (96) gegen Federkraft nach unten verschieblich sind, und daß die Tragelemente am oberen Ende mit Druckrollen (90) versehen sind, die während des Hinwegführens der Aufhängeschlaufen (30) über den Rauch- oder Kochstab (38) unter einem ortfesten horizontalen Druckbalken (56) entlanglaufen, von welchem die Tragelemente (80, 82, 84) mit den Haken (96) über die Druckrollen (90) für das Absetzen der Aufhängeschlaufen (30) auf den Rauch- oder Kochstab (38) nach unten bewegbar sind.

11. Vorrichtung nach Anspruch 4, **dadurch gekennzeichnet,** daß die Hebel (46) an den Enden zweier einander umschließender Ausgangswellen (42, 44) eines Getriebes (40) angeordnet und von diesen in zwei Schritten um insgesamt 360° drehbar sind, wobei sie während des ersten Schritts axial auseinandergespreizt und während des zweites Schritts wieder in Anlage gegeneinander gebracht werden, und daß die Hebel (46) von den Wellen (42, 44) weg doppelt abgekröpft sind.

## Claims

1. A method for the mechanized suspension of individual sausages, manufactured on an automatic filling machine and with loops fastened to their ends, on smoking- or cooking rods, wherein the individual loops, on being fastened to the end of the sausage, are grasped, widened and deposited on a smoking- or cooking rod, characterized in that after being grasped by a first pair of movable supporting members the loops are raised from the output region of the filling tube and are simultaneously widened, whereupon the widened loops are taken over by a second pair of movable supporting members, are individually guided over the smoking- or cooking rod, which is clamped on one side in the take-up position, and are finally deposited on the smoking- or cooking rod at the position scheduled for this.

2. A method according to claim 1, characterized in that the widened loops are raised further by the second pair of supporting members than by the first pair of supporting members before they are guided over the smoking- or cooking rod.

3. A method according to claims 1 or 2, characterized in that the deposition of the loops on the smoking- or cooking rod is effected by lowering the second pair of supporting members below the upper terminating plane of the smoking- or cooking rod.

4. A device for carrying out the method according to any one of the preceding claims, characterized by two levers (46), which can swivel upwards in a controlled manner and which at the same time can be spread apart from each other axially for widening the loops (30), the ends of the levers being provided with hook apertures (48) for grasping the suspension loops (30) when the latter are secured to the sausage length (102), an endless conveyor (50) with at least one controlled circulating conveyor element (52), at the lower end of which two hooks (96) are disposed with a transverse spacing between them, into which hooks the widened loops (30) can be transferred from the hook apertures (48) of the levers (46) and guided away over the smoking- or cooking rod (38), and means by which the hooks of the conveyor element (52) can be lowered in a controlled manner below the upper terminating plane of the smoking- or cooking rod (38).

5. A device according to claim 4, characterized in that the endless conveyor (50) has a first ascending section (50a) and a second horizontal section (50b), wherein the smoking- or cooking rod (38) is clamped at one end, below the second section (50b).

6. A device according to claim 4, characterized in that a plurality of conveyor elements (52) is provided on the endless conveyor (50), at peripheral spacings which are greater than the length of a smoking- or cooking rod (38).

7. A device according to claim 6, characterized in that the endless conveyor (50) has two parallel endless chains (60), between which the conveyor elements (52) are suspended.

8. A device according to claim 7, characterized in that the conveyor elements are constructed as conveyor carriages (52), which are guided within channel-shaped guide tracks (66) surrounding the conveyor chains (60).

9. A device according to claim 8, characterized in that additional guide rollers (72) are mounted on both sides of the conveyor carriages (52), which guide rollers are guided within a second channel-shaped guide track (70) which only extends over the lower runs of the conveyor chains (60) and which runs in relation to the first guide track (66) in such a way that the conveyor carriages (52) along the lower runs of the conveyor chains (60) have their hooks (96) pointing vertically downwards.

10. A device according to claim 8, characterized in that the conveyor carriages (52) have housings (74) in which supporting members (80, 82, 84) for the hooks (96) can move downwards against spring pressure, and that the supporting members are provided at their upper ends with pressure rollers (90), which run below locally fixed horizontal pressure beam (56) whilst the suspension loops (30) are being guided away over the smoking- or cooking rod (38), by means of which pressure beam the supporting members (80, 82, 84) with the hooks (96) can be moved downwards via the pressure rollers (90) for the deposition of the suspension loops (30) on the smoking- or cooking rod (38).

11. A device according to claim 4, characterized in that the levers (46) are disposed at the ends of two mutually enclosed output shafts (42, 44) of a drive (40), and the levers can be rotated by a total of 360° by these shafts in two steps, wherein during the first step the levers are axially spread apart from each other and during the second step they are again brought into contact with each other, and that the levers (46) are doubly bent away from the shafts (42, 44).

## Revendications

1. Procédé de mise en suspension mécanisée, sur des rails de fumaison ou de cuisson, de saucisses individuelles sortant d'une machine automatique de remplissage en portant à leurs extrémités des boucles, qui pendant leur fixation à l'extrémité de la saucisse sont successivement engagées ouvertes et déposées sur un rail de fumaison ou de cuisson, caractérisé en ce que les boucles, une fois engagées sont retirées de la zone de fabrication du tube de remplissage par une première paire d'éléments porteurs mobiles et ouvertes en même temps, après quoi les boucles ouvertes recevant d'une deuxième paire d'éléments porteurs, individuels, sont transmises sur le rail de fumaison ou de cuisson fixé d'un côte à un emplacement de réception et finalement sont déposées à l'endroit prédéterminé sur le rail de fumaison et de cuisson.

2. Procédé selon la revendication 1, caractérisé en ce que la seconde paire d'éléments porteurs donne aux boucles ouvertes, avant de les transmettre sur le rail de fumaison ou de cuisson, un déplacement vers le haut supérieur à celui déjà donné par la première paire d'éléments porteurs.

3. Procédé selon la revendication 1, caractérisé en ce que le dépôt des boucles sur le rail de fumaison ou de cuisson est obtenu par descente de la seconde paire d'éléments porteurs en dessous du niveau du plan supérieur du rail de fumaison ou de cuisson.

4. Dispositif pour la mise en oeuvre du procédé selon une des revendications précédentes, caractérisé en ce qu'il comporte deux leviers (46) dont on peut commander le basculement vers le haut et en même temps, afin d'ouvrir les boucles (30), l'écartement axial, les extrémités de ces leviers portant des encoches (48) servant à engager les boucles de suspension (30) au moment de leur fixation sur le boyau de la saucisse (102), un transporteur sans fin (50) équipé d'au moins un organe de transfert (52) à circulation commandée, qui porte à sa partie inférieure deux crochets (96), espacés transversalement, pouvant recevoir les boucles ouvertes (30) situées dans les encoches (48) du levier (46) pour les transmettre sur le rail de fumaison ou de cuisson (38), ainsi que des moyens permettant de commander la descente des crochets de l'organe (52) en dessous de la limite supérieure du rail de fumaison ou de cuisson (38).

5. Dispositif selon la revendication 4, caractérisé en ce que le transporteur sans fin (50) comporte une première partie ascendante (50a) suivie d'une seconde partie horizontale (50b), le rail de fumaison ou de cuisson (38) ayant son extrémité placée serrée en dessous de la seconde partie (50b).

6. Dispositif selon la revendication 4, caractérisé en ce que le transporteur sans fin (50) est équipé de plusieurs organes de transfert (52) espacés entre eux d'une longueur supérieure à celle d'un rail de fumaison ou de cuisson (38).

7. Dispositif selon la revendication 6, caractérisé en ce que le transporteur sans fin (50) est équipé de deux chaînes sans fin (60) parallèles entre lesquelles sont suspendus les organes de transfert (52).

8. Dispositif selon la revendication 7, caractérisé en ce que les organes de transfert sont des chariots (52) roulant dans des rainures de guidage (66) longeant les chaînes transporteuses (60).

9. Dispositif selon la revendication 8, caractérisé en ce que le chariot de transfert (52) porte de chaque côté un galet supplémentaire de guidage (72), circulant dans une seconde rainure de guidage (70) s'étendant seulement le long de la partie inférieure du parcours de chaque chaîne du transporteur (60) et disposée par rapport à la première rainure de guidage (66) de manière que le chariot (52), le long du chemin inférieur de la chaîne de transport, ait des crochets (96) orientés verticalement vers le bas.

10. Dispositif selon la revendication 8, caractérisé en ce que les chariots (52) comportent un boîtier (74) dans lequel les éléments porteurs (80, 82, 84) des crochets (96) sont mobiles vers le bas à l'opposé d'une force élastique et portent à leurs extrémités supérieures des galets de poussée (90) qui, pendant le guidage des boucles de suspension (30) le long du rail de fumaison ou de cuisson se déplacent le long et en dessous d'une rampe d'appui horizontale localement fixe (56) qui produit le mouvement de descente des éléments porteurs (80, 82, 84) avec leurs crochets (96) de manière à déposer les boucles (30) sur le rail de fumaison et de cuisson (38).

11. Dispositif selon la revendication 4, caractérisé en ce que les leviers (46) sont montés aux extrémités de deux arbres de sortie concentriques (42, 44) entraînés par un mécanisme (40) qui permet de les faire tourner, en deux étapes, de 360°, avec écartement au cours de la première étape puis retour à la position de départ pendant la seconde étape, les leviers (46) étant coudés deux fois en s'éloignant des axes (42, 44).
